Europäisches Patentamt

European Patent Office

Office européen des brevets

(19)

(11) Numéro de publication: **0 382 599**
**A1**

(12) # DEMANDE DE BREVET EUROPEEN

(21) Numéro de dépôt: **90400263.1**

(51) Int. Cl.5: **B62D 7/14**

(22) Date de dépôt: **31.01.90**

(30) Priorité: **08.02.89 FR 8901632**

(43) Date de publication de la demande:
**16.08.90 Bulletin 90/33**

(84) Etats contractants désignés:
**DE GB IT**

(71) Demandeur: **AUTOMOBILES PEUGEOT**
**75, avenue de la Grande Armée**
**F-75116 Paris(FR)**

Demandeur: **AUTOMOBILES CITROEN**
**62 Boulevard Victor-Hugo**
**F-92200 Neuilly-sur-Seine(FR)**

(72) Inventeur: **Galtier, Lucien**
**28 Rue de Favigny**
**F-91390 Morsang sur Orge(FR)**
Inventeur: **Langlois, Michel**
**6 Rue de Bretagne**
**F-78180 Montigny le Bretonneux(FR)**
Inventeur: **Barthelemy, André**
**52 Route de Limours**
**F-78470 Saint Remy les Chevreuse(FR)**

(74) Mandataire: **Durand, Yves Armand Louis et al**
**Cabinet Z. Weinstein 20, Avenue de**
**Friedland**
**F-75008 Paris(FR)**

(54) **Dispositif de commande de direction arrière pour véhicule automobile à quatre roues directrices.**

(57) La présente invention concerne un dispositif de commande de direction arrière d'un véhicule automobile.

Le dispositif est caractérisé en ce que le doigt (36) portant la partie formant galet (37, 38) est solidaire d'un moyeu (35) fixé rigidement coaxialement aux deux extrémités adjacentes respectivement des deux barres des directions arrière (13) et l'arbre d'entraînement (10) est accouplé à un disque (22) à denture périphérique pour l'entraîner en rotation autour de son axe lors du braquage des roues avant de façon que la rainure formant came (39) provoque le déplacement des barres de direction arrière (13) parallèlement à l'axe (X-X').

La présente invention trouve application dans le domaine de l'automobile.

_Fig. 3_

1a

## Dispositif de commande de direction arrière pour véhicule automobile à quatre roues directrices.

La présente invention concerne un dispositif de commande de direction arrière notamment pour un véhicule automobile à quatre roues directrices.

Un tel dispositif doit commander le braquage des roues arrière en fonction du braquage des roues avant imposé par le volant de direction du véhicule.

On sait que pour obtenir le meilleur comportement routier possible du véhicule dans les conditions ci-dessus définies, il est nécessaire de braquer les roues arrière dans le même sens que les roues avant pour une valeur d'angle de braquage du volant inférieure à une valeur de seuil prédéterminée et dans le sens opposé aux roues avant lorsque la valeur d'angle de braquage dépasse la valeur de seuil. On obtient ainsi un effet survireur souhaitable du véhicule lorsque l'angle de braquage est relativement important par exemple lorsqu'on gare le véhicule dans un garage ou un parc de stationnement et un effet sous-vireur également souhaitable du véhicule lorsque l'angle de braquage est relativement petit comme c'est le cas lorsque le véhicule roule relativement rapidement.

Un tel dispositif satisfaisant aux conditions ci-dessus est par exemple décrit dans la demande de brevet européen N° 88 401 792-2 déposée le 8 juillet 1988 aux noms des demanderesses.

Selon le dispositif connu par cette demande de brevet français antérieure, les barres de direction arrière sont déplacées axialement suivant une loi prédéfinie pour commander le pivotement des roues arrière dans un sens ou dans l'autre à partir d'une position moyenne de réglage de parallélisme des roues du véhicule en ligne droite.

Cependant, l'agencement du dispositif connu est tel qu'il occasionne des frottements lors de sa manoeuvre, d'où un mauvais rendement et un mauvais retour du volant en position en ligne droite du véhicule. De plus, le dispositif connu est relativement encombrant et ne permet pas d'effectuer un remplacement rapide du profil de came définissant la loi de braquage susmentionnée, un tel remplacement s'avérant souvent nécessaire pour adapter le comportement routier du véhicule à la route sur laquelle il se déplace surtout lorsque ce dernier est un véhicule de course.

La présente invention a pour but d'éliminer les inconvénients ci-dessus en proposant un dispositif de commande de direction arrière notamment pour un véhicule automobile à quatre roues directrices, dont les roues arrière sont reliées à des barres de direction de commande du pivotement des roues arrière et du type comprenant un arbre de transmission monté longitudinalement au véhicule de façon pivotante autour de son axe en réponse à une action de braquage des roues avant du véhicule et un mécanisme de direction arrière mécaniquement relié à l'extrémité arrière de l'arbre de transmission par l'intermédiaire d'un arbre d'entraînement et aux barres de direction arrière pour commander le braquage des roues arrière en fonction du braquage des roues avant, ledit mécanisme comprenant, mobiles l'une par rapport à l'autre sous l'action de l'arbre d'entraînement, une pièce comportant une rainure formant came, dont le profil définit la loi de braquage des roues arrière selon le braquage des roues avant et une partie formant galet engagée dans la rainure et portée par un doigt rigide transversal à la direction de déplacement des barres de direction arrière, lequel dispositif est caractérisé en ce que le doigt portant la partie formant galet est solidaire d'un moyeu fixé rigidement coaxialement aux deux extrémités adjacentes respectivement des deux barres de direction arrière et l'arbre d'entraînement est accouplé à la pièce comportant la rainure notamment par une transmission à engrenage pour l'entraîner en rotation autour d'un axe fixe de rotation lors du braquage des roues avant de façon que la rainure formant came provoque le déplacement des barres de direction arrière parallèlement à la pièce comportant la rainure par l'intermédiaire de l'ensemble partie formant galet-doigt porteur-moyeu.

Suivant un mode de réalisation, la transmission à engrenage précitée est du type comprenant un pignon d'entraînement solidaire de l'arbre d'entraînement engrenant avec une denture périphérique de la pièce précitée en forme de disque.

Selon une caractéristique particulière de l'invention, la rainure formant came comprend deux parois latérales parallèles opposées inclinées et la partie formant galet précité comprend deux galets tronconiques tourillonnant sur le doigt précité et maintenus en appui respectivement sur les deux parois latérales inclinées par une rondelle élastique, par exemple du type Belleville, interposée entre les deux galets.

Avantageusement, l'arbre d'entraînement comprend des moyens de rattrapage de jeu entre le pignon d'entraînement et la denture périphérique du disque.

Ces moyens de rattrapage de jeu comprennent un pignon à denture hélicoïdale solidaire de l'arbre d'entraînement, une couronne à denture intérieure hélicoïdale en engrènement avec le pignon à denture hélicoïdale et à denture extérieure droite en engrènement avec la denture droite périphérique du disque et un organe formant ressort de poussée de la couronne sur la denture hélicoïdale du pignon de l'arbre d'entraînement.

Selon une autre caractéristique de l'invention, un second doigt solidaire du moyeu précité porte une seconde partie formant galet engagée dans une rainure fixe de guidage parallèle à la direction de déplacement des barres de direction arrière, laquelle rainure est constituée de deux rainures inférieure et supérieure réalisées respectivement dans deux plaques superposées solidaires du boîtier du mécanisme de direction arrière, la seconde partie formant galet comprenant deux galets cylindriques de guidage superposés tourillonnant sur le second doigt et en appui en opposition respectivement sur une paroi latérale de la rainure inférieure et une paroi latérale opposée de la rainure supérieure.

Selon un second mode de réalisation, la pièce portant la rainure formant came est en forme de tambour à deux parois latérales cylindriques interne et externe superposées jointivement, dont l'axe de rotation est perpendiculaire à l'arbre d'entraînement et la rainure formant came est définie par deux rainures interne et externe réalisées respectivement dans les deux parois latérales interne et externe, et la première partie formant galet comprend deux galets cylindriques superposés tourillonnant sur leur doigt correspondant et maintenus en appui en opposition respectivement sur une paroi latérale de la rainure interne et une paroi latérale opposée de la rainure externe.

Selon ce second mode de réalisation, la transmission à engrenage est du type comprenant une partie formant vis sans fin solidaire de l'arbre d'entraînement engrénant tangentiellement avec un secteur denté solidaire de l'arbre du tambour.

Avantageusement, les doigts portant respectivement les première et seconde parties formant galet sont diamétralement opposés.

Comme pour le premier mode de réalisation, l'arbre d'entraînement comprend des moyens de rattrapage de jeu entre la partie formant vis sans fin et le secteur denté précités, comprenant un pignon à denture hélicoïdale solidaire de l'arbre d'entraînement, une couronne à denture intérieure hélicoïdale en engrénement avec le pignon à denture hélicoïdale et à vis sans fin extérieur en prise avec le secteur denté, et un organe formant ressort, tel qu'une rondelle Belleville, de poussée de la couronne sur la denture hélicoïdale du pignon de l'arbre d'entraînement.

Selon un troisième mode de réalisation, les barres de direction arrière ainsi que leur moyeu de liaison sont disposées coaxialement à l'intérieur du tambour, dont l'axe de rotation se trouve ainsi confondu avec l'axe longitudinal des barres de direction arrière, et les premier et second doigts précités portant les parties formant galet forment un doigt unique traversant la double paroi du tambour avec la partie formant galet de guidage située au voisinage de l'extrémité libre du doigt unique.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant plusieurs modes de réalisation de l'invention, et dans lesquels:

La figure 1 représente en perspective une vue schématique d'un véhicule automobile muni du dispositif de direction conforme à l'invention.

La figure 2 représente un exemple de courbe de braquage des roues arrière en fonction des roues avant.

La figure 3 est une vue en coupe longitudinale du dispositif de l'invention.

La figure 4 est une vue en coupe suivant la ligne IV-IV de la figure 3.

La figure 5 est une vue en coupe suivant la ligne V-V de la figure 3.

La figure 6 est une vue en coupe suivant la ligne VI-VI de la figure 4.

La figure 7 est une vue en coupe longitudinale identique à celle de la figure 3 mais représentant un second mode de réalisation du dispositif de l'invention.

La figure 8 est une vue en coupe suivant la ligne VIII-VIII de la figure 7.

La figure 9 est une vue en coupe suivant la ligne IX-IX de la figure 8.

La figure 10 est une vue en coupe longitudinale identique à celle de la figure 3 mais représentant un troisième mode de réalisation du dispositif de l'invention.

La figure 11 est une vue suivant la flèche XI de la figure 10 ; et

La figure 12 est une vue en coupe suivant la ligne XII-XII de la figure 11.

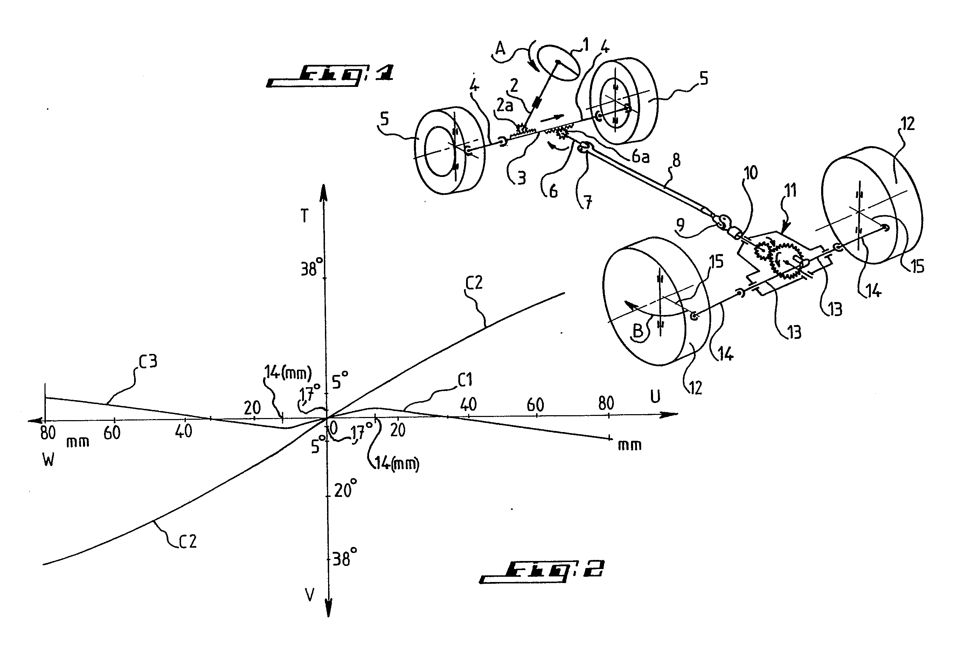

En se reportant à la figure 1, la référence 1 désigne un volant de direction dont l'arbre de direction 2 est relié, par l'intermédiaire d'un pignon denté 2a, à un arbre à crémaillères 3 dont les extrémités sont reliées respectivement à deux barres d'accouplement 4 aux extrémités extérieures desquelles sont reliées les roues avant 5 qui peuvent être orientées angulairement suivant le sens de braquage du volant. Un arbre 6 à pignon denté 6a en engrénement avec une crémaillère de l'arbre 3 s'étend en arrière de ce dernier et a son extrémité arrière reliée par un joint articulé 7 à un arbre de transmission 8 monté longitudinalement au véhicule. L'extrémité arrière de l'arbre 8 est reliée par un joint articulé 9 à un arbre d'entraînement 10 d'un mécanisme de direction arrière 11 disposé entre les deux roues arrière 12 du véhicule. Le mécanisme de direction arrière 11 est mécaniquement relié à deux barres de direction arrière 13 commandant par l'intermédiaire de biellettes 14 des leviers 15 de pivotement des roues arrière 12 montées sur pivot.

Le mécanisme de direction arrière 11 est adapté pour braquer les roues arrière 12 dans le même sens que les roues avant 5 pour une valeur d'angle de braquage du volant inférieure à une valeur de seuil et dans le sens opposé aux roues avant quand la valeur d'angle de braquage du volant dépasse la valeur de seuil.

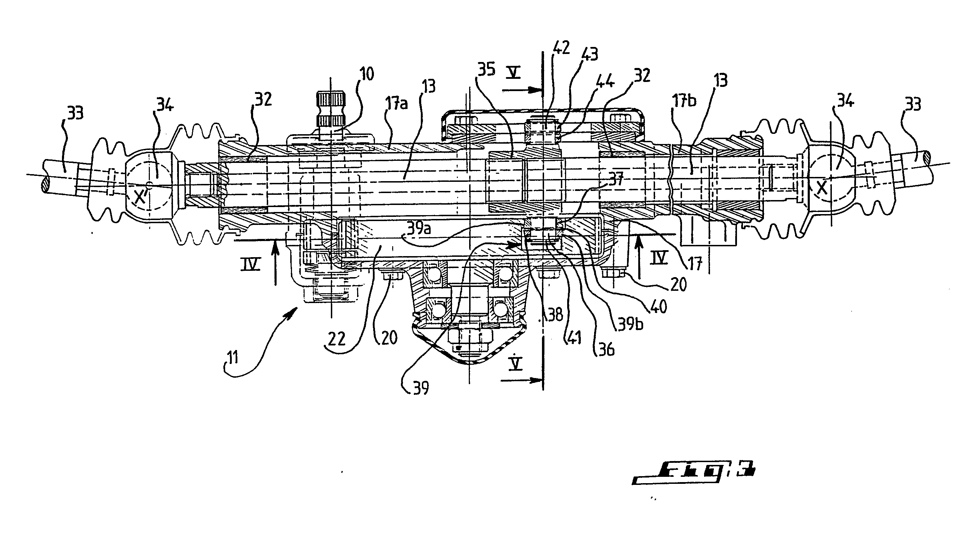

La commande du braquage des roues arrière 12 en fonction du braquage des roues avant 5 s'effectue suivant une loi prédéterminée telle que celle représentée à titre d'exemple par la courbe de la figure 2. Sur cette figure, sur les demi-axes OU et OW sont portées les valeurs de la course de l'arbre à crémaillère avant 3 correspondant à des valeurs d'angle de braquage du volant 1 respectivement lors du déplacement du véhicule en virage à droite et en virage à gauche. Sur les demi-axes OT et OV sont portées les valeurs d'angle de braquage des roues avant et arrière respectivement vers la droite et vers la gauche en référence à la figure 1. Plus précisément, la courbe C1 située à droite de l'axe TOV représente les deux sens de braquage des roues arrière 12 selon la course de l'arbre 3 ou l'amplitude de braquage donnée au volant de direction 1 dans un même sens, la courbe C2 étant relative à l'angle moyen de braquage des roues avant suivant la course de l'arbre 3. Lorsque le volant 1 est tourné suivant la flèche A en figure 1 d'un angle de braquage faible inférieur à une valeur de seuil correspondant dans le cas présent à une course de l'arbre 3 d'environ 14 millimètres, les roues arrière sont braquées dans le même sens que les roues avant, comme indiqué par la flèche B en figure 1, d'une valeur d'angle maximale d'environ 1,7 degrés correspondant à la valeur de seuil de façon à produire un effet sous-vireur souhaitable du véhicule. Lorsque le volant est tourné d'un angle de braquage important, dans le cas présent supérieur à la valeur de seuil correspondant à 14 millimètres de course de l'arbre 3, les roues arrière sont braquées dans le sens opposé à la flèche B, donc opposé aux roues avant en passant par la condition de parallélisme des roues du véhicule en ligne droite (correspondant à une course d'environ 35 millimètres de l'arbre 3) jusqu'à une valeur maximale d'angle de braquage des roues arrière vers la gauche d'environ 5 degrés pour une valeur d'angle de braquage du volant correspondant à environ 80 millimètres de course de l'arbre 3 de façon à produire un effet survireur souhaitable du véhicule. Le même raisonnement est fait en référence à la courbe C3 située à gauche de l'axe TOV et ne sera pas expliqué en détail sinon que pour un angle de braquage d'un sens opposé à la flèche A du volant inférieur à une valeur correspondant à environ 14 millimètres de course de l'arbre 3, les roues arrière sont braquées vers la gauche par rapport à la figure 1 suivant le même sens que les roues avant tandis que pour un angle de braquage important du véhicule dans le même sens, les roues arrière sont braquées à droite, donc dans le sens opposé aux roues avant en passant par leur parallélisme par rapport a l'axe longitudinal du véhicule (correspondant à une course d'environ 35 millimètres de l'arbre 3) de façon à engendrer respectivement deux effets sous-vireur et survireur souhaitables du véhicule.

Le dispositif selon l'invention est donc adapté pour commander le braquage des roues arrière en fonction du braquage des roues avant suivant la loi du braquage définie par la courbe C1 ou C3 étant bien entendu que toute autre loi, adaptée au comportement du véhicule, peut être élaborée.

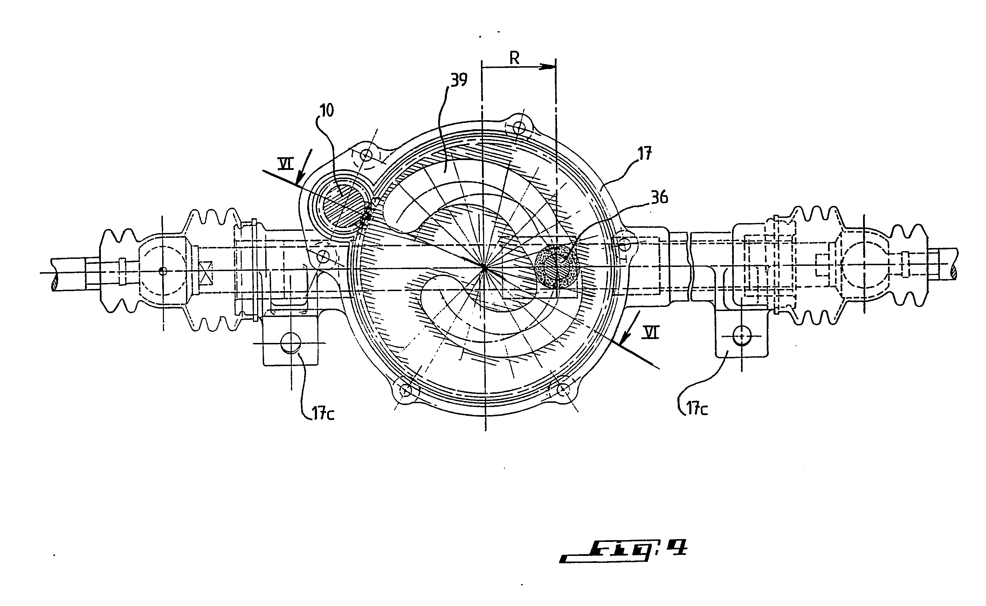

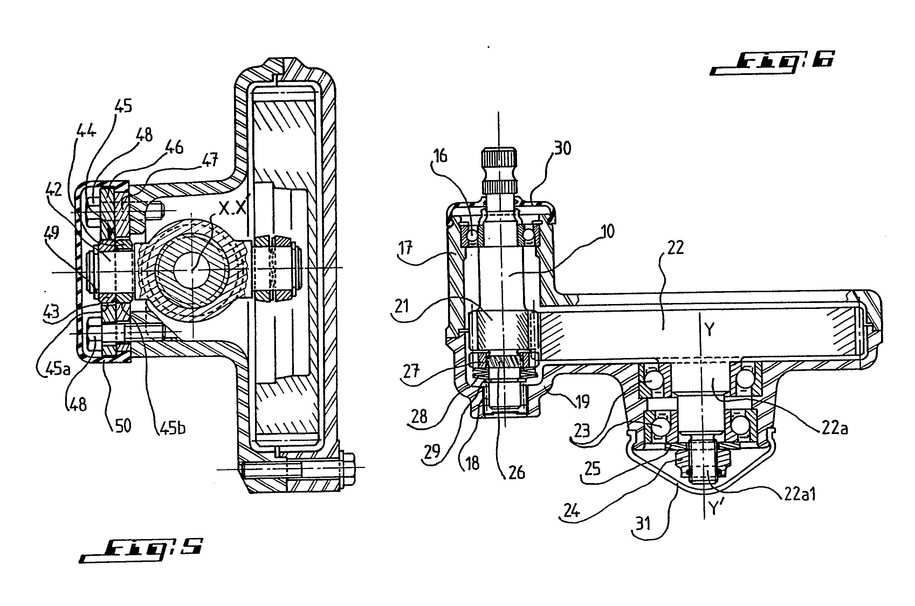

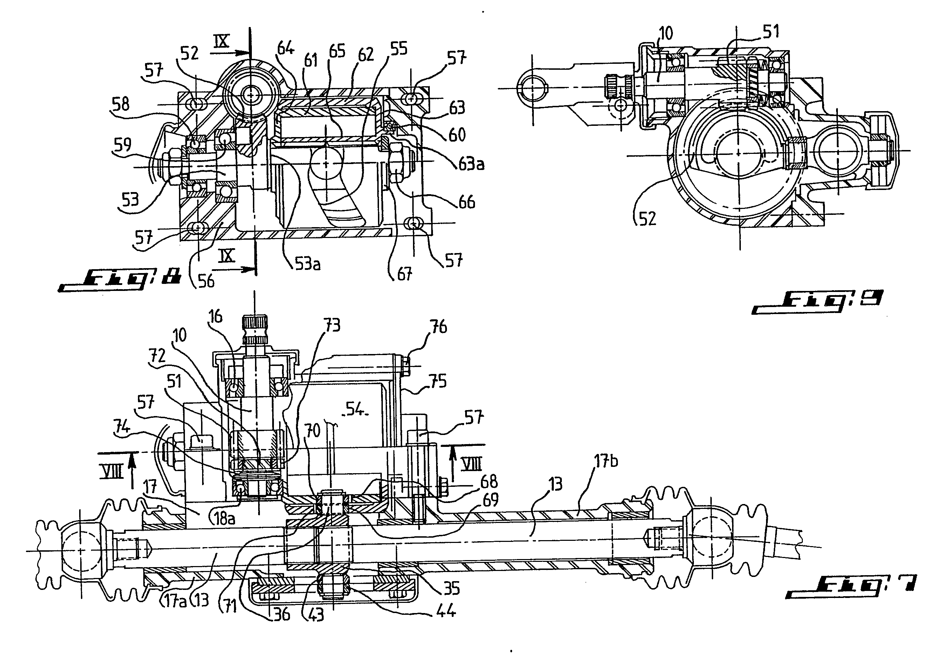

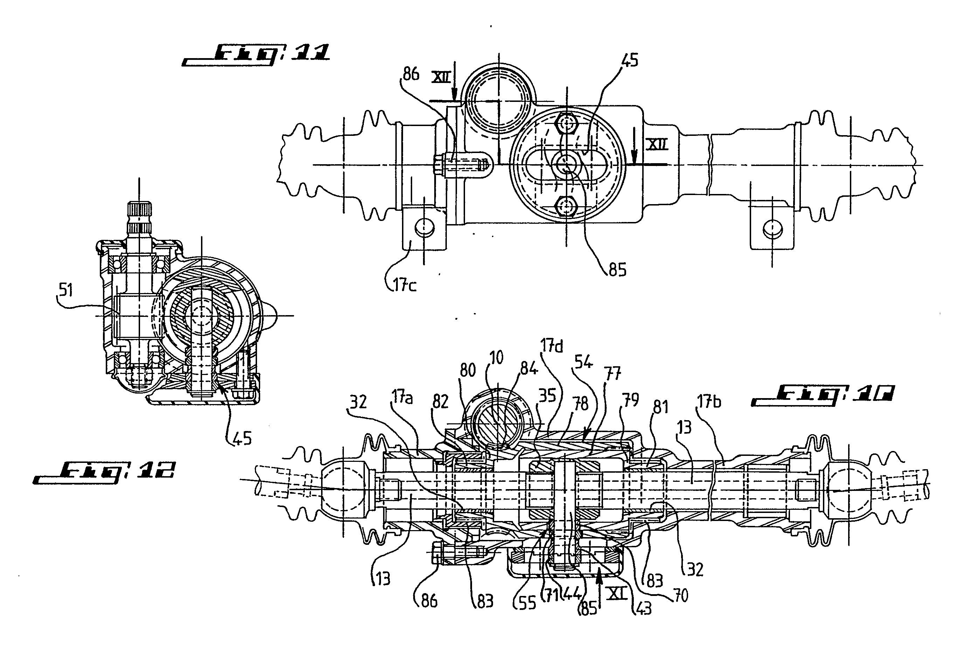

Selon le premier mode de réalisation du dispositif représenté aux figures 3 à 6, l'arbre d'entraînement 10 est monté rotatif dans le mécanisme 11 par l'intermédiaire d'un roulement à bille 16 fixé au carter 17 du mécanisme 11 et d'un roulement à aiguille 18 fixé dans une partie formant couvercle 19 du mécanisme 11 solidaire du carter 17 par des vis de fixation 20. L'arbre 10 est ainsi maintenu coaxialement dans le mécanisme 11 par des roulements 16 et 18 et a son axe longitudinal perpendiculaire à l'axe longitudinal X-X′ des deux barres coaxiales de direction arrière 13, l'axe X-X′ symbolisant également la direction de déplacement axial des barres 13 respectivement dans deux traverses 17a et 17b du carter 17 montées transversalement entre les roues arrière 12. L'arbre 10 comprend, solidaire de celui-ci un pignon 21 à denture droite engrénant avec une denture droite périphérique d'un plateau ou disque 22 monté rotatif autour d'un axe Y-Y′ perpendiculaire a l'axe X-X′. L'arbre de rotation 22a du plateau 22 est fixé dans un logement approprié du couvercle 19 par l'intermédiaire d'une paire de roulements à billes interne et externe axialement distants 23 fixés dans le logement et d'un écrou 24 vissé sur un embout fileté 22a1 de l'arbre 22a et prenant appui sur une rondelle 25 elle-même en appui sur le roulement externe 23. L'arbre 10 comprend de plus les moyens de rattrapage de jeu entre le pignon d'entraînement 21 et la denture périphérique du plateau 22. Ces moyens comprennent un pignon 26 à denture hélicoïdale de très grand pas solidaire de l'arbre 10 au voisinage du pignon 21, une couronne 27 à denture intérieure hélicoïdale en engrénement avec le pignon 26 et à denture extérieure droite en engrénement avec la denture périphérique du plateau 22, et un organe 28 formant ressort élastique de poussée de la couronne 27 sur la denture hélicoïdale du pignon 26. Avantageusement, l'organe formant ressort 28 est constitué par une rondelle du type Belleville maintenue axialement sur une portion correspondante de l'arbre d'entraînement 10 en appui sur la face latérale de la couronne 27 opposée au pignon 21 par un anneau élastique ou circlips 29 solidaire de la partie d'extrémité de l'arbre 10 opposée à celle reliée à l'arbre de transmission. Un couvercle de protection 30 monté coaxialement autour d'une portion de l'extrémité d'entrée de l'arbre 10 est fixé dans une gorge annulaire correspondante d'un embout d'entrée du carter 17 tandis qu'un autre couvercle de protection 31 ferme la partie extérieure du logement de l'arbre 22a. Le couvercle 19 est situé en arrière des traverses 17a et 17b et l'axe longitudinal de l'arbre 10 est situé entre l'axe Y-Y′ et la roue arrière gauche du véhicule tout en étant disposé à une certaine distance au-dessus des traverses de carter 17a et 17b. Les barres de direction arrière 13 sont guidées dans leurs déplacements axiaux suivant l'axe X-X′ par deux paliers espacés 32 solidaires respectivement des traverses de carter 17a et 17b. Les deux barres 13 sont reliées de façon articulées à leurs deux extrémités opposées à une biellette 33 par l'intermédiaire d'une rotule 34, chaque biellette 33 ayant son extrémité opposée à la rotule 34 reliée de façon articulée à un levier de commande (non représenté) de pivotement de la roue arrière associée. Le carter 17 comprend des pattes de fixation 17c du mécanisme 11 à la partie de caisse arrière (non représentée) du véhicule, les pattes 17c étant dans le cas présent solidaires des traverses de carter 17a et 17b.

Les deux barres 13 ont leurs deux extrémités adjacentes solidaires l'une de l'autre par un moyeu ou manchon 35. Pour cela, l'extrémité libre de chaque barre 13 est filetée et vissée dans un taraudage correspondant du moyeu 35, les deux extrémités adjacentes des barres 13 étant vissées dans le moyeu 35 jusqu'à ce que leurs extrémités libres soient jointives. Un doigt rigide 36 est solidarisé au moyeu 35 perpendiculairement à l'axe X-X′ et porte deux galets tronconiques identiques respectivement interne 37 et externe 38 tourillonnant sur le doigt 36 et engagés dans une rainure formant came 39 usinée dans le plateau 22 et ayant un profil définissant la loi de braquage des roues arrière selon le braquage des roues avant. Le profil de la rainure 39 tel que représenté à la figure 4 établit la loi de braquage représentée en figure 2. Plus précisément, la rainure 39 comprend deux parois latérales courbes parallèles opposées et inclinées 39a et 39b avec les galets 37 et 38 maintenus en appui respectivement sur les deux parois inclinées 39a et 39b par l'intermédiaire d'une rondelle élastique 40, telle que par exemple une rondelle du type Belleville, interposée entre les deux galets 37 et 38 et tendant à les écarter l'un de l'autre. Les deux galets 37 et 38 sont maintenus axialement sur le doigt 36 par l'intermédiaire d'un jonc d'arrêt 41.

Les barres 13 sont retenues en rotation autour de l'axe X-X′ par un second doigt rigide 42 solidaire du moyeu 35 et diamétralement opposé au doigt 36. Le doigt 42 porte deux galets cylindriques superposés respectivement externe 43 et interne 44 engagés dans une rainure fixe de guidage 45 parallèle à l'axe X-X′ et formée par deux rainures externe 45a et interne 45b réalisées respectivement dans deux plaques superposées jointivement 46 et 47 solidaires du carter 17 par les vis de fixation 48. Les deux galets 43 et 44 ont chacun le même diamètre externe qui est inférieur à la largeur identique de chaque rainure 45a, 45b tandis que leur diamètre interne est légèrement supérieur au diamètre du doigt 42. Avant de solidariser les deux plaques 46, 47 au carter 17, celles-ci sont déplacées en sens opposé l'une par rapport à l'autre dans une direction perpendiculaire à l'axe X-X′ à l'aide d'un levier de manoeuvre (non représenté) adapté pour exercer sur les deux plaques 46, 47 respectivement des efforts de sens opposés perpendiculaires à l'axe du doigt 42 et passant par celui-ci. Les forces réagissent de telle manière que le galet interne 45b soit disposé en appui, sans pratiquement aucun jeu, entre le doigt 42 et la paroi latérale de la rainure 45b située à gauche de l'axe du doigt 42 (voir figure 5) et que le galet externe 43 soit disposé en appui, également sans pratiquement aucun jeu, entre le doigt 42 et la paroi latérale de la rainure 45a située à droite de l'axe du doigt 42 et donc opposée à la paroi de la rainure 45b sur laquelle prend appui le galet interne 44. Le déplacement relatif en sens opposés des deux plaques 46, 47 revient donc à rattraper le jeu pouvant exister entre les galets 43, 44 et la rainure de guidage 45 tout en permettant cependant à ces galets de tourillonner sur le doigt 42. Les forces de rattrapage du jeu sont maintenues pendant le serrage des vis de fixation 48. Les deux galets 43 et 44 sont ainsi en appui en opposition respectivement sur une paroi latérale de la rainure externe 45a et une paroi latérale opposée de la rainure interne 45b. De plus, les galets 43 et 44 sont maintenus axialement au doigt 43 par un jonc d'arrêt 49 solidaire de l'extrémité libre du doigt 42. Les plaques 46 et 47 ainsi que les galets 43 et 44 sont protégés de la poussière par un cache 50.

Le fonctionnement du dispositif ci-dessus décrit résulte déjà de la description qui en a été faite et va être maintenant discuté brièvement.

Le pivotement autour de son axe de l'arbre de transmission 8 suite aux mouvements de braquage du volant 1 entraîne en rotation l'arbre 10 dont le pignon 21 entraîne en rotation le plateau denté 22 autour de l'axe Y-Y′ dans un sens ou dans l'autre suivant le sens de braquage du volant. La partie formant came 39 du plateau rotatif 22 provoque le déplacement du doigt 36 suivant une trajectoire correspondant au profil de la rainure 39, le guidage du doigt 36 dans la rainure 39 étant assuré par les galets 37, 38 roulant sur les parois latérales 39a, 39b de la rainure avec un effort de contact permanent sur celles-ci grâce à la rondelle ressort 40. Les galets 37, 38 et le doigt 36 entraînent le moyeu 35 suivant l'axe X-X' sans jeux de battement et dans un sens permettant le braquage des roues arrière en fonction de la loi de braquage de la figure 2. Le déplacement axial du moyeu 35 et des barres 13 est guidé par le doigt 42 portant les galets 43, 44 roulant dans la rainure de guidage 45. Le profil de la rainure formant came 39 du plateau 22 a pour action de faire varier la valeur du rayon R indiquée en figure 4 d'une même valeur pour une même valeur angulaire de rotation correspondant du plateau 22 de part et d'autre d'une position moyenne en ligne droite des roues du véhicule. Cette variation du rayon R correspond à un angle de braquage des roues arrière lié à un angle de braquage des roues avant.

Le dispositif du second mode de réalisation représenté aux figures 7 à 9 diffère de celui du premier mode de réalisation par le mécanisme formant came d'entraînement· suivant l'axe X-X' des barres de direction arrière 13 et par la transmission à engrenage entre l'arbre 10 et ce mécanisme.

L'arbre 10 comprend, solidaire de celui-ci une partie formant vis sans fin 51 engrenant tangentiellement avec un secteur denté 52 solidaire d'un arbre 53, parallèle à l'axe X-X' des barres de direction arrière 13 et entraînant en rotation un tambour 54 portant une rainure formant came 55 réalisée sur la paroi latérale cylindrique de celui-ci. L'arbre 10 et l'arbre 53 sont chacun montés rotatif dans un boîtier 56 fixé aux traverses de carter 17a, 17b, en avant de celles-ci, par des vis de fixation 57. L'arbre 10 est supporté dans le boîtier 56 par des roulements à billes 16 et 18a. L'arbre 53 est monté rotatif dans le boîtier 56 par l'intermédiaire d'une paire de roulement à billes 58, 59 située d'un côté de l'arbre et d'un roulement à billes 60 situé au côté opposé de l'arbre 53.

Le tambour 54 est formé par deux parois latérales cylindriques respectivement interne 61 et externe 62 superposées jointivement. La paroi 62 est raccordée à une paroi radiale 63 perpendiculaire à l'arbre 63 et sur la face interne de laquelle vient en butée l'extrémité de la paroi latérale interne 61. La paroi 63 comprend une portée annulaire 63a de support du roulement 60. La paroi latérale 61 est raccordée également à une paroi radiale 64 opposée à la paroi 63 et venant en butée contre un épaulement 53a correspondant de l'arbre 53. Une partie formant entretoise 65 solidaire de la paroi 63, vient en butée contre la face interne de la paroi 64 lorsqu 'un écrou 66 est vissé sur une partie filetée de l'arbre 53 et bloqué en appui sur une rondelle 67 elle-même en appui contre une face externe correspondante de la paroi 63. Ainsi, les parois 61-64 définissant le tambour 54 sont solidaires de l'arbre 53.

La rainure formant came 55, ayant dans le cas présent une forme sensiblement en forme de S, est définie par deux rainures interne 68 et externe 69 réalisées respectivement à travers les parois latérales 61 et 62. Les parois latérales parallèles ou opposées de chacune des deux rainures 68 et 69 sont droites et perpendiculaires à l'axe de rotation du tambour 54. En 36, on reconnaît le doigt portant deux galets cylindriques superposés respectivement interne 70 et externe 71 tourillonnant sur le doigt 36 et maintenus en appui en opposition respectivement sur une paroi latérale de la rainure interne 68 et une paroi latérale opposée de la rainure externe 69 après blocage de l'écrou 66. Le doigt 36 est solidaire du moyeu 35 solidarisant les deux extrémités adjacentes des barres de direction arrière 13 et le doigt 42 solidaire du moyeu 35, toujours diamétralement opposé au doigt 36, porte les deux galets 43, 44 engagés dans la rainure de guidage 45 comme pour le premier mode de réalisation.

L'arbre d'entraînement 10 comprend également des moyens de rattrapage de jeu entre la partie formant vis sans fin 51 et le secteur denté 52. Ces moyens comprennent un pignon 72 à denture hélicoïdale solidaire de l'arbre 10, une couronne 73 à denture intérieure hélicoïdale en engrènement avec le pignon 72 et à vis sans fin extérieure en prise avec le secteur denté 52 et un organe formant ressort 74, tel que par exemple une rondelle du type Belleville, poussant, la couronne 73 sur la denture hélicoïdale du pignon 72.

L'entraînement en rotation de l'arbre 10 par l'arbre de transmission 8 entraîne également en rotation la vis sans fin 51 et, par l'intermédiaire du secteur denté 52, entraîne en rotation le tambour 54 dont la rainure 55 pousse le doigt 36 par l'intermédiaire des galets de roulement 68, 69 suivant le profil préétabli de la rainure 55 définissant une loi de braquage des roues arrière en fonction du braquage des roues avant. L'action de poussée exercée sur le doigt 36 déplace axialement suivant l'axe X-X' le moyeu 35 et les barres de direction arrière 13, le guidage axial des barres 13 étant assuré par des galets 43, 44 roulant sur la rainure de guidage 45.

Le deuxième mode de réalisation est particulièrement adapté pour effectuer rapidement le remplacement du tambour 54 par un autre tambour portant une rainure formant came d'un profil différent, en désolidarisant le boîtier 56 du carter 17 par dévissage des vis 57 et retirant le couvercle de protection 75 du boîtier 56 par dévissage des vis de fixation 76.

Suivant le troisième mode de réalisation représenté aux figures 10 à 12, le tambour 54, au lieu d'être fixé extérieurement aux traverses de carter 17a, 17b parallèlement aux barres de direction arrière 13 comme dans le deuxième mode de réalisation, est disposé dans un boîtier de logement 17d du carter 17 situé entre les traverses 17a et 17b avec l'axe longitudinal du tambour 54 confondu à l'axe X-X' de déplacement des barres 13.

Le tambour 54 est défini par deux parois latérales cylindriques respectivement interne 77 et externe 78 superposées jointivement et deux parois radiales 79, 80, perpendiculaires à l'axe X-X' raccordées respectivement aux deux parois latérales 77, 78. Aux parois 79, 80 sont raccordées respectivement deux portions tubulaires 81, 82 coaxiales à l'axe X-X' faisant office de paliers de support de roulements 83 par exemple du type à aiguilles qui sont logés dans des alésages correspondant du boîtier 17d. Les portions tubulaires 81 et 82 servent également de support des paliers 32. Une roue dentée 84 est usinée sur la portion de raccordement entre la paroi latérale 78 et la paroi radiale 80 et engrène avec la partie formant vis sans fin 51 de l'arbre 10 toujours perpendiculaire à X-X'.

Selon ce mode de réalisation, un seul doigt rigide 85 est utilisé pour porter les galets cylindriques 70 et 71 coopérant avec la rainure formant came 55 et les galets cylindriques 43, 44 coopérant avec la rainure de guidage 45. Le doigt 85 est disposé transversalement au moyeu 35 en traversant celui-ci et les parois latérales du tambour 54 en dessous de l'axe X-X'. La figure 10 montre le doigt 85 ayant son extrémité opposée à celle portant les galets 43, 44 et 70, 71 solidaire, par exemple par emmanchement en force, de la paroi latérale cylindrique correspondante du moyeu 35 mais il est bien entendu que le doigt 85 peut être solidaire du moyeu 35 en faisant saillie uniquement de la paroi latérale cylindrique du moyeu 35 située du côté de la rainure de guidage 45. Il est à noter que le boîtier 17d est solidaire par moulage de la traverse de carter 17b tandis que la traverse 17a est constituée d'une partie indépendante fixée au boîtier 17c par des vis de fixation 86. Bien entendu, la rainure formant came 55, comme pour le deuxième mode de réalisation, est réalisée par deux rainures interne et externe formées respectivement dans les parois 77 et 78 du tambour avec les galets cylindriques 70 et 71 maintenus en appui en opposition respectivement sur une paroi latérale droite de la rainure interne et une paroi latérale droite opposée de la rainure externe.

En prévoyant ainsi un tambour à came d'entraînement des barres de direction arrière 13 monté rotatif dans un boîtier de carter coaxialement à l'axe X-X' de déplacement des barres 13, on réduit considérablement l'encombrement du dispositif de l'invention.

L'entraînement à engrenage du tambour sur 54 de la figure 10 peut être réalisé par une roue conique à denture droite solidaire de l'arbre 10 et engrenant avec une roue conique à denture droite solidaire du tambour 54.

## Revendications

1. Dispositif de commande de direction arrière notamment pour un véhicule automobile à quatre roues directrices, dont les roues arrière (12) sont reliées à des barres de direction (13) de commande du pivotement des roues arrière et du type comprenant un arbre de transmission (8) monté longitudinalement au véhicule de façon pivotante autour de son axe en réponse à une action de braquage des roues avant (5) du véhicule et un mécanisme de direction arrière (11) mécaniquement relié à l'extrémité arrière de l'arbre de transmission (8) par l'intermédiaire d'un arbre d'entraînement (10) et aux barres de direction arrière (13) pour commander le braquage des roues arrière (12) en fonction du braquage des roues avant (5), ledit mécanisme (11) comprenant, mobiles l'une par rapport à l'autre sous l'action de l'arbre d'entraînement (10), une pièce (22 ; 54) comportant une rainure formant came (39 ; 55), dont le profil définit la loi de braquage des roues arrière (12) selon le braquage des roues avant (5), et une partie formant galet (36, 37 ; 70, 71) engagée dans la rainure et portée par un doigt rigide (36 ; 85) transversal à la direction (X-X') de déplacement des barres de direction arrière (13), caractérisé en ce que le doigt (36 ; 85) portant la partie formant galet (37, 38 ; 70, 71) est solidaire d'un moyeu (35) fixé rigidement coaxialement aux deux extrémités adjacentes respectivement des deux barres de direction arrière (13) et l'arbre d'entraînement (10) est accouplé à la pièce (22 ; 54) comportant la rainure (39 ; 55) notamment par une transmission à engrenage pour l'entraîner en rotation autour d'un axe (Y-Y') fixe de rotation lors du braquage des roues avant (5) de façon que la rainure formant came provoque le déplacement des barres de direction arrière (13) parallèlement à la pièce comportant la rainure par l'intermédiaire de l'ensemble partie formant galet-doigt porteur-moyeu.

2. Dispositif selon la revendication 1, caractérisé en ce que l'arbre d'entraînement (10) est perpendiculaire à la direction de déplacement (X-X') des barres de direction arrière (13).

3. Dispositif selon la revendication 1 ou 2, caractérisé en ce qu'il comprend un second doigt (42) solidaire du moyeu (35) précité et portant une seconde partie formant galet (43, 44) engagée dans une rainure fixe de guidage (45) parallèle à la direction de déplacement des barres de direction arrière (13).

4. Dispositif selon l'une des revendications précédentes, caractérisé en ce que la rainure fixe de guidage (45) est constituée de deux rainures externes (45a) et interne (45b) réalisées respectivement dans deux plaques superposées (46, 47) solidaires du boîtier (17) du mécanisme de direction arrière (11) et la seconde partie formant galet comprend deux galets cylindriques de guidage superposés (43, 44) tourillonnant sur le second doigt (42) et en appui en opposition respectivement sur une paroi latérale de la rainure supérieure et une paroi latérale opposée de la rainure inférieure.

5. Dispositif selon l'une des revendications précédentes, caractérisé en ce que les doigts (36, 42) portant respectivement les première et seconde parties formant galet sont diamétralement opposés.

6. Dispositif selon l'une des revendications précédentes, caractérisé en ce que l'arbre d'entraînement (10) porte un pignon d'entraînement (21) engrènant avec une denture périphérique de la pièce précitée en forme de disque (22).

7. Dispositif selon l'une des revendications précédentes, caractérisé en ce que la rainure formant came (39) comprend deux parois latérales parallèles opposées inclinées (39a, 39b) et la première partie formant galet comprend deux galets tronconiques (37, 38) tourillonnant sur le doigt (36) et maintenus en appui respectivement sur les deux parois latérales inclinées (39a, 39b) par une rondelle élastique (40), par exemple du type Belleville, interposée entre les deux galets (37, 38).

8. Dispositif selon l'une des revendications précédentes, caractérisé en ce que l'arbre d'entraînement (10) comprend des moyens de rattrapage de jeu entre le pignon d'entraînement (21) et la denture périphérique du disque (22).

9. Dispositif selon la revendication 8, caractérisé en ce que la denture du pignon d'entraînement (21) et la denture périphérique du disque (22) sont droites et les moyens de rattrapage de jeu comprennent un pignon à denture hélicoïdale (26) solidaire de l'arbre d'entraînement (10), une couronne (27) à denture intérieure hélicoïdale en engrénement avec le pignon (26) à denture hélicoïdale et à denture extérieure droite en engrénement avec la denture droite périphérique du disque (22), et un organe formant ressort (28) de poussée de la couronne (27) sur la denture hélicoïdale du pignon (26) de l'arbre (10).

10. Dispositif selon la revendication 9, caractérisé en ce que l'organe formant ressort (28) est une rondelle du type Belleville maintenue axialement sur l'arbre d'entraînement (10) par un anneau élastique (29), tel que circlips, solidaire de l'arbre d'entraînement (10).

11. Dispositif selon l'une des revendications précédentes, caractérisé en ce que l'axe de rotation de la pièce en forme de disque (20) est parallèle à l'arbre d'entraînement (10).

12. Dispositif selon l'une des revendications 1 à 4, caractérisé en ce que la pièce précitée est en forme de tambour (54) à deux parois latérales cylindriques interne (61) et externe (62) superposées jointivement, dont l'axe fixe de rotation est perpendiculaire à l'arbre d'entraînement (10) et la rainure formant came (55) est définie par deux rainures interne (68) et externe (69) réalisées respectivement dans les deux parois latérales interne (61) et externe (62), et la première partie formant galet comprend deux galets cylindriques superposés (70, 71) tourillonnant sur le doigt (36) et maintenus en appui en opposition respectivement sur une paroi latérale de la rainure interne (70) et une paroi latérale opposée de la rainure externe (69).

13. Dispositif selon la revendication 12, caractérisé en ce que le tambour (54) précité est monté sur un arbre rotatif (53), l'arbre d'entraînement (10) comprend une partie formant vis sans fin (51) engrenant tangentiellement avec un secteur denté (52) solidaire de l'arbre (53) du tambour (54).

14. Dispositif selon l'une des revendications 1-4, 12 et 13, caractérisé en ce que les doigts (36, 42) portant respectivement les deux parties formant galet sont diamétralement opposés.

15. Dispositif selon l'une des revendications 1-4, 12 et 13, caractérisé en ce que l'arbre d'entraînement (10) comprend des moyens de rattrapage de jeu entre la partie formant vis sans fin (51) et le secteur denté (52) comprenant un pignon à denture hélicoïdale (72) solidaire de l'arbre d'entraînement (10), une couronne (73) à denture intérieure hélicoïdale en engrénement avec le pignon (72) et à vis sans fin extérieure en prise avec le secteur denté (52), et un organe formant ressort (74), tel qu'une rondelle Belleville, de poussée de la couronne (73) sur la denture hélicoïdale du pignon (62) de l'arbre d'entraînement (10).

16. Dispositif selon l'une des revendications 1-4 et 12-15, caractérisé en ce que l'arbre (53) du tambour (54) est parallèle à la direction de déplacement des barres de direction arrière (13) et, avec le tambour (54), est disposé à l'extérieur des traverses de carter (17a, 17b) dans lesquelles se déplacent les barres (13).

17. Dispositif selon la revendication 12, caractérisé en ce que les barres de direction arrière (13) ainsi que leur moyeu de liaison (35) sont disposés coaxialement à l'intérieur du tambour (54), dont l'axe de rotation se trouve ainsi confondu avec l'axe longitudinal (X-X') des barres de direction arrière (13), et les deux doigts précités portant les parties formant galets forment un doigt unique (85) traversant la double paroi du tambour (54) avec la partie formant galet de guidage située au voisinage de l'extrémité libre du doigt (85).

18. Dispositif selon la revendication 17, caractérisé en ce que l'arbre d'entraînement (10) comprend une partie formant vis sans fin (51) engrénant tangentiellement avec une roue dentée (84) solidaire du tambour (54).

_Fig. 1_

_Fig. 2_

EP 0 382 599 A1

10  35  42  43
32      44  32
34  32  17a  13      V  17b  13  34  33
33
X                              X
                37
IV          39a          IV  17
            20            20
IV  22  20  38  41  39b  40
11          39  36

Fig 3

Fig. 4

Fig. 6

Fig. 5

EP 0 382 599 A1

Fig. 9

Fig. 7

Fig. 8

Fig.11

Fig.10

Fig.12

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,A | EP-A-0 299 859  (PEUGEOT)<br>* Revendications; figures *<br>--- | 1 | B 62 D   7/14 |
| A | FR-A-2 566 360  (HONDA)<br>* Revendications; figures *<br>----- | 1 | |

|  |  |
|---|---|
| | DOMAINES TECHNIQUES RECHERCHES (Int. Cl.5) |
| | B 62 D |

Le présent rapport a été établi pour toutes les revendications

| Lieu de la recherche | Date d'achèvement de la recherche | Examinateur |
|---|---|---|
| LA HAYE | 02-05-1990 | PIRIOU J.C. |